# EUROPEAN PATENT SPECIFICATION

(11) **EP 3 720 675 B1**
(45) Date of publication and mention of the grant of the patent: **19.01.2022**
(21) Application number: 18815355.5
(22) Date of filing: 21.11.2018
(51) Int. Cl.: B29C 45/18, B29C 45/28, B29C 44/34, B29C 44/10, B29C 44/58, B29C 45/17, B29C 44/42, B29C 44/02

(54) **METHOD OF PRODUCTION VIA INJECTION-COMPRESSION OR A COMBINATION OF INJECTION-COMPRESSION AND INJECTION OF AN OBJECT MADE OF THERMOPLASTIC POLYMER ADMIXED WITH AT LEAST ONE GAS AT THE SUPERCRITICAL STATE**
VERFAHREN ZUR HERSTELLUNG EINES GEGENSTANDES AUS THERMOPLASTISCHEM POLYMER VERMISCHT MIT MINDESTENS EINEM GAS IM SUPERKRITISCHEN ZUSTAND DURCH SPRITZPRÄGEN ODER DURCH EINE KOMBINATION AUS SPRITZPRÄGEN UND SPRITZEN
MÉTHODE DE PRODUCTION PAR INJECTION-COMPRESSION OU COMBINAISON D'INJECTION-COMPRESSION ET D'INJECTION D'UN OBJET EN POLYMÈRE THERMOPLASTIQUE MÉLANGÉ À AU MOINS UN GAZ À L'ÉTAT SUPERCRITIQUE

(30) Priority: 04.12.2017 IT 201700139331
(43) Date of publication of application: 14.10.2020
(73) Proprietor: Sapa S.P.A., 80121 Napoli (NA) (IT); Runipsys Europe S.A.S., 73420 Savoie Hexapole (Méry) (FR)
(72) Inventor: AFFINITA, Antonio, I-80121 Napoli (NA) (IT); DERICHE, Eric, F-73420 Savoie Hexapole (Méry) (FR); SABATIER, Martial, F-73420 Savoie Hexapole (Méry) (FR)
(74) Representative: Fiammenghi, Eva
(86) International application number: PCT/IB2018/059167
(87) International publication number: WO 2019/111085

(56) References cited:
- EP-A1- 2 957 411
- WO-A2-2012/178145
- US-A1- 2015 038 606

## Description

### Field of the invention

The present invention relates to the field of mechanics and industry, in particular to the field of plastic components. More in detail, the plastic elements obtained according to the method of the present invention patent are suitable for use in the automotive industry.

### Prior art

Most of the automotive industry's research is now aimed at finding solutions to comply with international agreements and national pollution laws, which provide for increasingly lower admissible percentages of CO₂ as the years go by. This lowering of emissions can be achieved in two ways: the first is to optimize the operation of engines that, at least at present, does not seem to give sufficient results to comply with the regulations; the second is to reduce the weight of the vehicle and therefore of each component.

Therefore, for all car manufacturers, car lightening is an essential objective, or the manufacturers may incur economic sanctions. The directive 2009/29/EC issued by the EU, in fact, requires the reduction of pollutant emissions from vehicles. As 75% of fuel consumption is directly related to the weight of the car, a reduction of 100 kg would decrease consumption by 11 g of CO₂ per kilometer.

Among the methods to obtain such lightening, car manufacturers have various possibilities:
- the reduction of sheet thickness;
- the use of aluminum alloys in the body and in the chassis;
- the use of magnesium and titanium alloys, for example for connecting rods;
- the use of composite materials such as carbon fiber, glass fiber, vegetable fibers, etc.;
- the use of light components, for example in structural foam, of aluminum honeycomb structures, expanded polypropylene, etc.

A first object of the present invention, to lighten plastic parts and, with reference to the use of the present invention in the automotive field, to contribute to the reduction of vehicle emissions, is to produce plastic components for vehicles consisting of a mixture of a thermoplastic polymer and a gas at the supercritical state.

A second object of the invention, described in detail below, is to optimize the production process, considerably shortening the solidification times of the constituent material of said components.

There are some international inventions concerning the introduction of a gas into a thermoplastic polymer. The difficulty of this process lies in the homogeneous mixing of the two materials in order to obtain a correct distribution of the gas inside the plastic material. Patent US 2002024165, owned by Trexel Inc., describes a method suitable for the production of foams, in particular microcellular foams. The method comprises an element which reduces the backflow of the molten polymer inside the extruder while the polymeric material is injected into a mold. The method can be used in injection molding, blow molding, or other processing techniques that include injection or ejection cycles. In some embodiments, the method uses mixing screws.

The criticalities related to the method described above and to other patents in the same field are mainly due to the high cost of the machines, due to which the two elements are mixed and are injected into the mold.

WO2012/178145A discloses a method of production via injection-compression or a combination of injection-compression and injection of an object made of thermoplastic polymer admixed with at least one gas at the supercritical state.

The object of the present invention is therefore to propose a new, innovative and cost-effective method of mixing a supercritical gas in a thermoplastic polymer in the liquid state for the production of components by injecting the mixture into a mold.

### Description of the invention

According to the present invention, a new method is provided for the production of any element consisting of a thermoplastic material admixed with at least one supercritical gas.

A typical application of this method is in the automotive industry, for the manufacture of plastic components such as the engine cover or interior cabinets of the car, but this does not in any way limit the application of this method to any other industrial production process. More specifically, the present invention is applied in the production of components that require the use of a mold suitably configured to perform injection/compression molding or injection/compression plus new injection. Said mold, therefore, has a movable and a fixed component which can assume an open or closed configuration. The introduction of a supercritical gas or a mixture of gas at the supercritical state in the thermoplastic polymer of which an element consists has two advantageous consequences: firstly, the solidification of the plastic material inside the interspace of the mold is faster; secondly, the homogeneous distribution of supercritical gas in the plastic material involves the improvement of the mechanical performance of the manufactured element, even in cases of impacts or crushing. It is important to maintain the supercritical condition of the gas at least until it is injected into the mold, to prevent the micro-bubbles of gas dispersed in the polymer from increasing too much in size and make the mixture unusable. This object is advantageously achieved by the present invention due to a series of technical devices described below.

The hot block used in the present invention, like the common hot chambers currently on the market, is provided with a heating system suitable for maintaining the temperature of the first thermoplastic polymer, and of the mixture of thermoplastic polymer and supercritical gas then, between 200°C and 320°C, preferably 270°C.

Upstream of the hot block there is a primary feed duct provided with a first shutter which, according to the pressure of the inlet polymer, blocks or at least partially allows the passage of the thermoplastic polymer at the liquid state inside the hot block.

Advantageously, inside the hot block, at least one distribution channel, preferably a plurality of distribution channels, direct the flow of thermoplastic polymer at the liquid state towards at least one hot mixing channel, preferably a corresponding plurality of hot mixing channels, where the addition of the supercritical gas to the thermoplastic polymer takes place.

One of the main advantages of the present invention lies in the positioning of said hot mixing channels, which are placed inside the hot block. This allows a significant reduction in gas leaks inside the mixture since, shortly after mixing, the injection into the mold occurs, thus minimizing the time in which the gas could detach from the polymer.

The introduction of the supercritical gas inside the polymer takes place due to at least one injector, preferably a plurality of injectors placed along the hot mixing channels and connected to at least one control unit in turn connected to a selected gas tank. This control unit causes the supercritical gas to be admixed to reach the injectors at the desired pressure and temperature.

Each injector is of course provided with its own second shutter to allow the correct opening and closing sequence of said nozzles, which can occur sequentially or simultaneously for all the injectors, and the modulation of the supercritical gas flow.

The configuration of the hot mixing channels is advantageously such as to allow homogeneous dispersion of the supercritical gas inside said thermoplastic polymer at the liquid state.

As already mentioned, said hot mixing channels are placed, in the preferred embodiment of the present invention, immediately upstream of the injection nozzles, which downstream have a third shutter which allows or blocks the flow of the thermoplastic polymer mixture and supercritical gas inside the interspace of said mold. Each of said injection nozzles may have a perpendicular or oblique axis with respect to the plane of the mold.

As regards said third shutters of said injection nozzles, they can advantageously be provided with an electric or hydraulic control device which, advantageously, allows adjustment of the position and/or speed of the opening of the third shutter itself. The greater or lesser opening of the latter is such as to allow the supercritical condition of the gas to be maintained and therefore the growth of the bubbles inside the polymer can take place only once the mixture has reached the interspace of the mold.

The production method object of the present invention consists of the following steps:
(A) first step of extruding the thermoplastic polymer at the liquid state through said supply duct, wherein the relative first shutter is opened at a predetermined pressure and a predetermined amount of said thermoplastic polymer flows into the hot block. Advantageously, during the first extrusion step of the thermoplastic polymer at the liquid state, the underlying mold is in the first open configuration, causing a pressure inside the hot block that is relatively low, up to a maximum value of 300 bar;
(B) second step of supercritical gas injection through the opening in sequence, or simultaneously, of the second shutters of said injectors so as to make a predetermined quantity of supercritical gas flow in the hot mixing channels during the passage of said thermoplastic polymer at the liquid state. In this step, due to the configuration of the hot mixing channels, the desired and planned mixing of the two components takes place. Also in this step, advantageously, the mold downstream of the system is in an open configuration so as to allow the introduction of supercritical gas at a pressure of between 30 bar and 300 bar;
(C) third step of distribution, in which the mixture consisting of the thermoplastic polymer at the liquid state and the supercritical gas is pushed inside the injection nozzles, while the mold is still in the open configuration;
(D) fourth step of injection, in which the third, preferably adjustable, shutters of said injection nozzles are opened in sequence, or simultaneously, allowing the desired amount of mixture to flow into the interspace of said mold necessary for making the object to be produced. Also during this step, the mold is still in the first open configuration. These first four steps are substantially concomitant;
(E) fifth step of mold closing, in which the movable component of the mold progressively approaches the fixed component, making the mold take the closed configuration. The due amount of the mixture of thermoplastic polymer and supercritical gas is already in the interspace of the mold and the movable component, pressing against the contact surface with the fixed component, exerts a preset pressure of between 300 bar and 1,200 bar, preferably 1,000 bar. This pressure value is such as to allow a homogeneous distribution of the mixture of thermoplastic polymer and supercritical gas within the interspace of the mold. In a version of the present invention, between the fourth step of injection and the fifth step of mold closing, a jet of air at a predetermined pressure is introduced into the interspace of the mold, by means of suitable channels, so as to control the expansion of the supercritical gas inside of the mixture, to prevent the excessive growth of gas bubbles.
(F) sixth step of cooling of the produced object, to await complete solidification of the mixture inside the interspace of the mold, still in a closed configuration;
(G) seventh step of extraction of the already solidified produced object by the mold again taking the open configuration. After this step, a new production cycle can start.

Advantageously, between said fourth injection step D and said fifth step of mold closing E, a new injection step can be carried out, giving rise to a mixed industrial process known as injection/compression + injection.

Depending on the construction needs, the complete filling of the hot block, before proceeding to the fifth step of closing the mold, takes place following a plurality of cycles including the first step of extrusion of the thermoplastic polymer, the second step of injection of the supercritical gas, the third step of distribution and the fourth injection step, which as said are simultaneous.

In a further version of the present invention, a single hot mixing channel is placed inside the hot block which feeds the injection nozzles through a plurality of distribution channels.

In a third embodiment, even more advantageous, on the other hand, the mixing of the gas with the polymer takes place directly inside the injection nozzles. This is due to the fact that the gas injectors are placed at the proximal end of the third shutters of the inlet nozzles themselves and in that said third shutters are made of a porous material, which therefore allows the gas to escape.

The advantages offered by the present invention are clear in the light of the above description and will be even clearer from the accompanying figures and the related detailed description.

### Description of the figures

The invention will hereinafter be described in at least one preferred embodiment thereof by way of non-limiting example with the aid of the accompanying figures, in which:

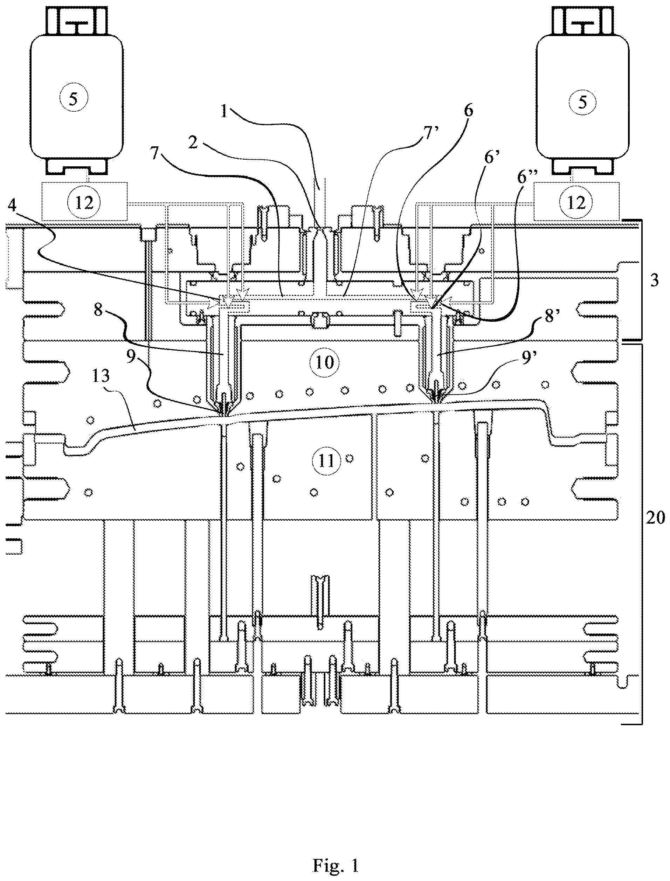

- FIGURE 1 shows a diagram of the preferred embodiment of the present invention. The feed duct 1 is seen at the top which, through the first shutter 2, enters the thermoplastic polymer into the distribution channels 7-7' inside the hot block 3. From here, the polymer passes through the hot mixing channels 4, provided with injectors 6-6'-6" - ... connected to the relative control unit 12 and to the relative tank 5 of supercritical gas. Downstream, the injection nozzles 8-8' are visible with the third shutters 9-9' which modulate the escape of the mixture into the interspace 13 of the mold 20, consisting of the fixed component 10 and the movable component 11.

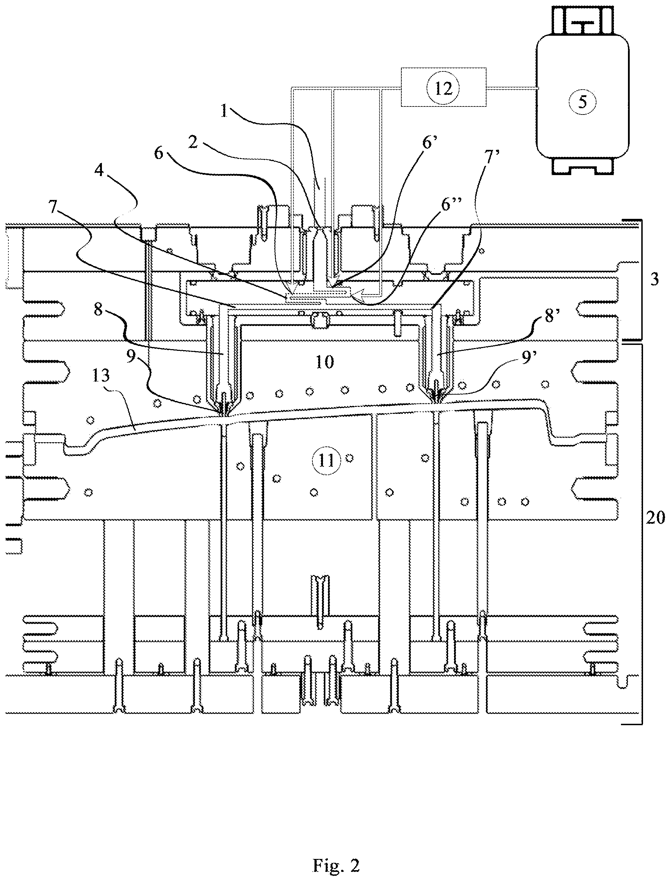

- FIGURE 2 illustrates a second version of the invention in which a single hot mixing channel 4 injects the mixture into a plurality of distribution channels 7-7' which reach the injection nozzles 8-8'.

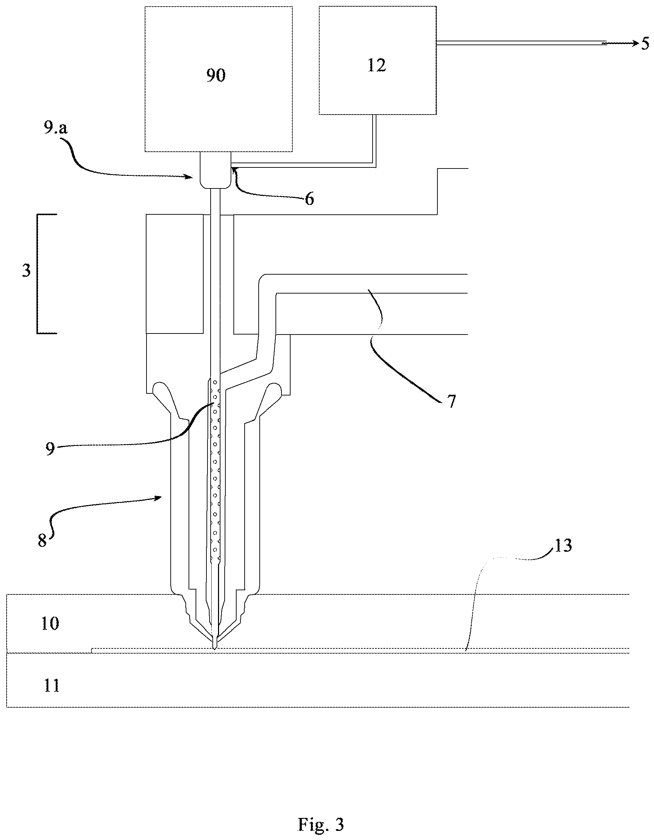

- FIGURE 3 shows the version of the present invention in which the injectors 6-6'-6" - ... are placed at the proximal end 9.a of the third shutters 9-9' and the latter are made of porous material. Also in this figure, the control device 90 is visible which makes the relative third shutter 9 adjustable.

### Detailed description of the invention

The present invention will now be described purely by way of non-limiting or binding example with the aid of the figures, which illustrate some embodiments relative to the present inventive concept.

With reference to FIG. 1, a preferred embodiment of the present invention is shown. In particular, the industrial machinery suitable for producing an object made of a thermoplastic material admixed with at least one supercritical gas is shown, having the shape of the interspace 13 of the mold 20.

The hot block 3 of the present invention is fed by a common feed duct 1 provided with a relative first shutter 2 which, under the required pressure, allows or reversibly, at least partially, blocks the flow of the thermoplastic polymer at the liquid state in a first extrusion step A. Once it has entered the hot block 3, the polymer remains in the molten state since said hot block 3 is provided with a heating system which maintains the temperature above the melting point, preferably in a neighborhood of 270°C. After passing through the distribution channels 7-7', the thermoplastic polymer reaches the hot mixing channels 4 located upstream of each injection nozzle 8-8'.

During said first extrusion step of the thermoplastic polymer A, the mold 20 downstream of the machinery is in an open configuration. This important precaution makes the pressure inside the machinery be relatively low and the extrusion of the thermoplastic polymer at the liquid state can take place at a pressure which does not exceed the maximum value of 300 bar.

After said first extrusion step of the thermoplastic polymer A, then, a second step of injection of the supercritical gas B follows which results in the desired mixture. This takes place inside said hot mixing channels 4 which are provided with a plurality of injectors 6-6'-6" - ... arranged along the path traveled by the thermoplastic polymer. Each of said injectors 6-6'-6" - ... has its own second shutter and is connected, upstream, with the gas control unit 12 which is fed by at least one tank 5 of the selected supercritical gas. Said control unit 12 is provided with a common system of heating elements adapted to heat said supercritical gas or mixture of gases at the supercritical state, up to a temperature ranging from 100°C to 320°C, preferably 250°C. The particular configuration of each hot mixing channel 4 is such as to allow the homogeneous dispersion of the supercritical gas inside the thermoplastic polymer, giving rise to the desired mixture. The positioning of the hot mixing channels 4 inside the hot block 3 will be such as to be as close as possible to the injection nozzles 8-8' so as to avoid as far as possible the dispersions of supercritical gas.

Also in the second step of supercritical gas injection B, the downstream mold 20 is in open configuration, allowing the introduction of supercritical gas at a relatively low pressure, of between 30 bar and 300 bar.

At this point the mixture just obtained is pushed inside the injection nozzles 8-8' in a third distribution step C, while the mold 20 is still in the open configuration.

A fourth step of injection D follows, in which the sequential or simultaneous opening of the third shutters 9-9' of the injection nozzles 8-8' causes the controlled escape of the mixture of thermoplastic polymer and supercritical gas to the interior of the interspace 13 of the mold 20 which is still in the open configuration.

In the preferred embodiment, said third shutters 9-9' are made adjustable by control devices 90 which can be both electric and hydraulic and which have the function of only partially opening said third shutters 9-9' to keep the inner pressure of the hot block 3 constant and therefore the supercritical state of the gas, preventing an excessive growth of gas micro-bubbles dispersed in the polymer.

Again in order to control the expansion of said supercritical gas micro-bubbles, once the mixture has been injected into the mold 20, air can be blown through special channels at a predetermined pressure which controls the expansion of the mixture inside the and prevents the excessive growth of bubbles of supercritical gas.

As soon as the correct amount of material is present inside the interspace 13 of the mold 20, a fifth step of mold closing E is carried out, in which the pressure that the movable component 11 exerts on the fixed component 10 of the mold 20 is such as to cause the homogeneous distribution of the material inside the interspace 13; in particular, it is between 300 bars and 1,200 bars, preferably equal to 1,000 bars.

At this point, a second injection step could possibly be contemplated in an injection/compression and new injection process.

A sixth cooling step F of the produced object is then carried out, that is, waiting for the complete solidification of the material inside the interspace 13 of the mold 20.

Finally, by bringing the mold 20 into the open configuration, it is possible to extract the object just created in a seventh extraction step G of the produced object, after which a new production cycle can begin.

With reference to FIG. 2, a possible variant is shown to be made to the hot block 3 of the machinery for making an object made of a thermoplastic material admixed with a supercritical gas. In particular, the extrusion of thermoplastic polymer at the liquid state from the feed duct 1 takes place directly inside a hot mixing channel 4, as previously described. Here, the mixing of the two components takes place and, subsequently, a plurality of distribution channels 7-7' supplies the mixture to the injection nozzles 8-8'.

A third embodiment is shown in FIG. 3 and provides for the provision of the injectors 6-6'-6" - ..., at the proximal end 9.a of said third shutters 9-9'. In this case, the material of construction of the third shutter 9-9' is of the porous type, thus determining the addition of the supercritical gas to the thermoplastic polymer in the proximity of the mold 20.

Finally, it is clear that modifications, additions or variants may be made to the invention described thus far which are obvious to a man skilled in the art, without departing from the scope of protection that is provided by the appended claims.

## Claims

1. Method of production via injection-compression or a combination of injection-compression and injection of an object made of thermoplastic polymer admixed with at least one gas at the supercritical state, that uses:
- a hot block (3), comprising:
∘ a heating system adapted to maintain the temperature of said thermoplastic polymer comprised between 200°C and 320°C, preferably 270°C;
∘ at least one primary feed duct (1) equipped with at least one first shutter (2) adapted to adjust, by at least partially stopping or releasing the flow of said thermoplastic polymer at the liquid state;
∘ at least one hot mixing channel (4) fed by means of the primary feed duct (1);
∘ at least one distribution channel (7-7'), fed by said hot mixing channel (4) and reaching at least one injection nozzle (8-8');
∘ at least one injector (6-6'-6"-...) of the supercritical gas connected to at least one control unit (12), provided with a common system of heating elements adapted to heat said supercritical gas, up to a temperature comprised between 100°C and 320°C, preferably 250°C; said supercritical gas coming from a common gas tank (5); each injector (6-6'-6"-...) being provided with a second shutter adapted to modulate the flow of the supercritical gas admixed within said hot mixing channel (4); said hot mixing channel (4) being organized in proximity to an injection nozzle (8-8') in order to allow the uniform dispersion of the supercritical gas fed inside said thermoplastic polymer at the liquid state;
∘ each injection nozzle (8-8') being provided with relative third shutter (9-9') adapted to introduce a predetermined quantity of said mixture of thermoplastic polymer at the liquid state and of said supercritical gas, inside the interspace (13) of a common mold (20);
- said mold (20) comprising a fixed component (10) and a movable component (11) adapted to assume, in a reversible manner, a first open configuration and a second closed configuration; said fixed component (10) and said movable component (11) defining an interspace (13) fed by said injection nozzles (8-8');
said production method comprising the following steps:
(A) a first step of extrusion of the thermoplastic polymer at the liquid state, in which said first shutter (2) is opened at a predetermined pressure, in a manner such that a predetermined quantity of said thermoplastic polymer flows within said hot block (3); said mold (20) being arranged in said first open configuration, so as to determine a pressure within the hot block (3) lower than or equal to 300 bar;
(B) a second step of introduction of the supercritical gas, in which each second shutter of the injectors (6-6'-6"-...) of said hot mixing channels (4) is opened and a predetermined quantity of supercritical gas flows within said hot mixing channels (4) during the passage of the thermoplastic polymer at the liquid state; said mold (20) being arranged in the first open configuration, so as to determine a pressure within the hot block (3) comprised between 30 bar and 300 bar;
(C) a third step of distribution, in which the mixture constituted by the thermoplastic polymer at the liquid state and the supercritical gas is thrust within each injection nozzle (8-8'); the mold (20) still being situated in the first open configuration, so as to determine a pressure within the hot block (3) comprised between 30 bar and 300 bar;
(D) a fourth step of injection, in which each third shutter (9-9') is opened, allowing the desired quantity of said mixture necessary for making the object to be produced to exit into the interspace (13) of the mold (20); the mold (20) still being situated in the first open configuration, so as to determine a pressure within the hot block (3) comprised between 30 bar and 300 bar;
(E) a fifth step of mold closure, in which the mold (20) assumes said second closed configuration by moving the movable component (11) close to the fixed component (10); said movable component (11) exerting a preset pressure on said fixed component (10) comprised between 300 bar and 1200 bar, preferably 1000 bar, adapted to allow a uniform distribution of the mixture of thermoplastic polymer and supercritical gas within the interspace (13) of the mold (20);
(F) a sixth step of cooling of the produced object, in which the mold (20) is maintained in said second closed configuration up to the solidification of the mixture of thermoplastic polymer and supercritical gas, said movable component (11) exerting a preset pressure on said fixed component (10) of said mold (20) comprised between 300 bar and 1200 bar, preferably 1000 bar;
(G) a seventh step of extraction of the produced object, in which said mold (20) assumes said first open configuration.

2. Method according to claim 1, **characterized in that** the position and/or the speed of each third shutter (9-9') is adjustable, each injection nozzle (8-8') being connected to a control device (90), hydraulic or electric, adapted to modulate the opening of each adjustable third shutter (9-9') so as to maintain the pressure of the thermoplastic polymer within the hot block (3) such to preserve the desired supercritical condition of the gas.

3. Method according to any one of the preceding claims, **characterized in that** the complete filling of the hot block (3), before proceeding with said fifth mold closure step (E), occurs following a plurality of cycles including said first step of extrusion of the thermoplastic polymer (A), said second step of introduction of supercritical gas (B), said third step of distribution (C) and said fourth step of injection (D) which are substantially simultaneous with each other.

4. Method according to any one of the preceding claims, **characterized in that** between the fifth mold closure steps (E) and the sixth cooling step (F), a new step occurs for injecting the mixture inside the interspace (13) of said mold (20), giving rise to a mixed process of injection-compression and injection.

5. Method according to any one of the preceding claims, **characterized in that** the interspace (13) of said mold (20), at least when arranged in said second closed configuration, is hermetically sealed.

6. Method according to the preceding claim 5, **characterized in that** during the fourth injection step (D), air is introduced within the interspace (13) of the mold (20), by means of suitable channels, at a predetermined pressure such to control the pressure of the thermoplastic polymer and, consequently, the development of micro-bubbles in the supercritical gas inside the mixture.

7. Method according to any one of the preceding claims, **characterized in that** said hot block (3) is provided with a hot mixing channel (4), adapted to feed a plurality of injection nozzles (8-8').

8. Method according to any one of the preceding claims, **characterized in that** each injector (6-6'-6"-...) of gas is arranged at the proximal end (9.a) of each third shutter (9-9') **and in that** each third shutter (9-9') is made of a porous material adapted to allow the mixing of the supercritical gas within the thermoplastic polymer at the liquid state directly inside each injection nozzle (8-8').

9. Method according to any one of the preceding claims, **characterized in that** each injector (6-6'-6"-...) of gas is arranged both at a hot mixing channel (4), and at the proximal end (9.a) of a third shutter (9-9') **and in that** each third shutter (9-9') is made of a porous material adapted to allow the mixing of the supercritical gas within the thermoplastic polymer at the liquid state directly inside each injection nozzle (8-8').

10. Method according to any one of the preceding claims, **characterized in that** each injection nozzle (8-8') is arranged in an oblique manner with respect to the plane of the mold (20).

## Patentansprüche

1. Verfahren zur Herstellung eines Gegenstandes aus thermoplastischem Polymer, dem zumindest ein Gas im überkritischen Zustand beigemischt ist, durch Injektionskompression oder eine Kombination aus Injektionskompression und Injektion, das verwendet
- einen heißen Block (3), der aufweist:
∘ ein Heizsystem, das geeignet ist, die Temperatur des genannten thermoplastischen Polymers zwischen 200°C und 320°C, vorzugsweise 270°C, zu halten;
∘ zumindest eine primäre Zuführungsleitung (1), die mit zumindest einem ersten Verschluss (2) ausgestattet ist, der geeignet ist, die Strömung des thermoplastischen Polymers im flüssigen Zustand zumindest teilweise anzuhalten oder freizugeben;
∘ zumindest einen Heißmischkanal (4), der mittels der primären Zufuhrleitung (1) gespeist wird;
∘ zumindest einen Verteilungskanal (7-7'), der von dem Heißmischkanal (4) gespeist wird und sich zu zumindest einer Injektionsdüse (8-8') erstreckt;
∘ zumindest einen Injektor (6-6'-6"-...) für das überkritische Gas, der mit zumindest einer Steuereinheit (12) verbunden ist, die mit einem gewöhnlichen System von Heizelementen versehen ist, die geeignet sind, das überkritische Gas bis zu einer Temperatur zwischen 100°C und 320°C, vorzugsweise 250°C, aufzuheizen; wobei das überkritische Gas aus einem gewöhnlichen Gastank (5) kommt; wobei jeder Injektor (6-6'-6"-....) mit einem zweiten Verschluss versehen ist, der geeignet ist, die Strömung des überkritischen Gases, das in dem Heißmischkanal (4) zugemischt wird, zu modulieren; wobei der Heißmischkanal (4) in der Nähe einer Injektionsdüse (8-8') angeordnet ist, um die gleichmäßige Dispersion des überkritischen Gases zu ermöglichen, das in das thermoplastische Polymer im flüssigen Zustand eingespeist wird;
∘ wobei jede Injektionsdüse (8-8') mit einem entsprechenden dritten Verschluss (9-9') versehen ist, der geeignet ist, eine vorgegebene Menge des Gemischs aus thermoplastischem Polymer im flüssigen Zustand und dem überkritischen Gas in den Zwischenraum (13) einer gewöhnlichen Form (20) einzubringen;
- wobei die Form (20) eine feste Komponente (10) und eine bewegliche Komponente (11) aufweist, die dazu geeignet ist, auf eine reversible Weise eine erste offene Konfiguration und eine zweite geschlossene Konfiguration anzunehmen; wobei die feste Komponente (10) und die bewegliche Komponente (11) einen Zwischenraum (13) definieren, der durch die Injektionsdüsen (8-8') gespeist wird;
wobei das Herstellungsverfahren die folgenden Schritte aufweist:
(A) einen ersten Schritt der Extrusion des thermoplastischen Polymers im flüssigen Zustand, bei dem der erste Verschluss (2) bei einem vorgegebenen Druck geöffnet wird, so dass eine vorgegebene Menge des thermoplastischen Polymers in den heißen Block (3) fließt; wobei die Form (20) in der ersten offenen Konfiguration angeordnet ist, um in dem heißen Block (3) einen Druck, der niedriger als oder gleich 300 bar ist, festzulegen;
(B) einen zweiten Schritt der Einbringung des überkritischen Gases, bei dem jeder zweite Verschluss der Injektoren (6-6'-6" -...) der Heißmischkanäle (4) geöffnet wird und eine vorgegebene Menge von überkritischem Gas während des Durchgangs des thermoplastischen Polymers im flüssigen Zustand in die Heißmischkanäle (4) strömt; wobei die Form (20) in der ersten offenen Konfiguration angeordnet ist, um innerhalb des heißen Blocks (3) einen Druck, der zwischen 30 bar und 300 bar aufweist, festzulegen;
(C) einen dritten Schritt der Verteilung, bei dem das aus dem thermoplastischen Polymer im flüssigen Zustand und dem überkritischen Gas bestehende Gemisch in jede Injektionsdüse (8-8') gedrängt wird; wobei sich die Form (20) noch in der ersten offenen Konfiguration befindet, um in dem heißen Block (3) einen Druck, der zwischen 30 bar und 300 bar aufweist, festzulegen;
(D) ein vierter Schritt der Injektion, bei dem jeder dritte Verschluss (9-9') geöffnet wird, um es der gewünschten Menge des Gemischs, die zum Herstellen des herzustellenden Objekts erforderlich ist, zu ermöglichen, in den Zwischenraum (13) der Form (20) auszutreten; wobei sich die Form (20) noch in der ersten offenen Konfiguration befindet, um in dem heißen Block (3) einen Druck, der zwischen 30 bar und 300 bar aufweist, festzulegen;
(E) einen fünften Schritt des Schließens der Form, bei dem die Form (20) die zweite geschlossene Konfiguration annimmt, indem die bewegliche Komponente (11) nahe an die feststehende Komponente (10) bewegt wird; wobei die bewegliche Komponente (11) einen voreingestellten Druck auf die feststehende Komponente (10) ausübt, der zwischen 300 bar und 1200 bar, vorzugsweise 1000 bar, beträgt und dazu geeignet ist, eine gleichmäßige Verteilung des Gemischs aus thermoplastischem Polymer und überkritischem Gas innerhalb des Zwischenraums (13) der Form (20) zu ermöglichen;
(F) einen sechsten Schritt des Abkühlens des hergestellten Gegenstandes, bei dem die Form (20) bis zur Verfestigung des Gemischs aus thermoplastischem Polymer und überkritischem Gas in der zweiten geschlossenen Konfiguration gehalten wird, wobei die bewegliche Komponente (11) einen voreingestellten Druck auf die feststehende Komponente (10) der Form (20), der zwischen 300 bar und 1200 bar, vorzugsweise 1000 bar, aufweist, ausübt;
(G) einen siebten Schritt der Entnahme des hergestellten Gegenstandes, bei dem die Form (20) die erste offene Konfiguration annimmt.

2. Verfahren nach Anspruch 1, **dadurch gekennzeichnet, dass** die Position und/oder die Geschwindigkeit eines jeden dritten Verschlusses (9-9') einstellbar ist, wobei jede Injektionsdüse (8-8') mit einer hydraulischen oder elektrischen Steuerungseinrichtung (90) verbunden ist, die geeignet ist, das Öffnen eines jeden einstellbaren dritten Verschlusses (9-9') zu modulieren, um den Druck des thermoplastischen Polymers innerhalb des heißen Blocks (3) aufrechtzuerhalten, so dass der gewünschte überkritische Zustand des Gases aufrechterhalten wird.

3. Verfahren nach einem der vorhergehenden Ansprüche, **dadurch gekennzeichnet, dass** das vollständige Füllen des heißen Blocks (3), bevor mit dem fünften Schritt des Schließens der Form (E) fortgefahren wird, nach mehreren Zyklen erfolgt, die den ersten Schritt der Extrusion des thermoplastischen Polymers (A), den zweiten Schritt der Einführung von überkritischem Gas (B), den dritten Schritt der Verteilung (C) und den vierten Schritt der Injektion (D), die im Wesentlichen gleichzeitig miteinander erfolgen, enthalten.

4. Verfahren nach einem der vorhergehenden Ansprüche, **dadurch gekennzeichnet, dass** zwischen dem fünften Schritt des Schließens der Form (E) und dem sechsten Schritt des Abkühlens (F) ein neuer Schritt des Injizierens des Gemischs in den Zwischenraum (13) der Form (20) erfolgt, was zu einem gemischten Prozess von Injektionskompression und Injektion führt.

5. Verfahren nach einem der vorhergehenden Ansprüche, **dadurch gekennzeichnet, dass** der Zwischenraum (13) der Form (20), zumindest wenn sie in der zweiten geschlossenen Konfiguration angeordnet ist, hermetisch verschlossen ist.

6. Verfahren nach dem vorhergehenden Anspruch 5, **dadurch gekennzeichnet, dass** während des vierten Injektionsschrittes (D) in den Zwischenraum (13) der Form (20) mittels geeigneter Kanäle Luft mit einem vorgegebenen Druck eingebracht wird, um den Druck des thermoplastischen Polymers und folglich die Entwicklung von Mikrobläschen in dem überkritischen Gas innerhalb des Gemischs zu steuern.

7. Verfahren nach einem der vorhergehenden Ansprüche, **dadurch gekennzeichnet, dass** der heiße Block (3) mit einem Heißmischkanal (4) versehen ist, der geeignet ist, mehrere Injektionsdüsen (8-8') zu speisen.

8. Verfahren nach einem der vorhergehenden Ansprüche, **dadurch gekennzeichnet, dass** jeder Injektor (6-6'-6"-...) für Gas am proximalen Ende (9.a) eines jeden dritten Verschlusses (9-9') angeordnet ist **und dadurch, dass** jeder dritte Verschluss (9-9') aus einem porösen Material besteht, das geeignet ist, das Mischen des überkritischen Gases mit dem thermoplastischen Polymer im flüssigen Zustand direkt innerhalb einer jeden Injektionsdüse (8-8') zu ermöglichen.

9. Verfahren nach einem der vorhergehenden Ansprüche, **dadurch gekennzeichnet, dass** jeder Injektor (6-6'-6"-...) für Gas sowohl an einem Heißmischkanal (4) als auch an dem proximalen Ende (9.a) eines dritten Verschlusses (9-9') angeordnet ist **und dadurch, dass** jeder dritte Verschluss (9-9') aus einem porösen Material besteht, das geeignet ist, das Mischen des überkritischen Gases in dem thermoplastischen Polymer im flüssigen Zustand direkt innerhalb einer jeden Injektionsdüse (8-8') zu ermöglichen.

10. Verfahren nach einem der vorhergehenden Ansprüche, **dadurch gekennzeichnet, dass** jede Injektionsdüse (8-8') in Bezug auf Ebene der Form (20) schräg angeordnet ist.

## Revendications

1. Procédé de production par injection-compression ou une combinaison d'injection-compression et d'injection d'un objet en polymère thermoplastique mélangé avec au moins un gaz à l'état supercritique, qui utilise :
- un bloc chaud (3), comprenant :
∘ un système de chauffage adapté pour maintenir la température dudit polymère thermoplastique comprise entre 200°C et 320°C, de préférence 270°C ;
∘ au moins un conduit d'alimentation primaire (1) équipé d'au moins un premier obturateur (2) adapté pour ajuster, en arrêtant ou libérant au moins partiellement l'écoulement dudit polymère thermoplastique à l'état liquide ;
∘ au moins un canal de mélange chaud (4) alimenté au moyen du conduit d'alimentation primaire (1) ;
∘ au moins un canal de distribution (7-7'), alimenté par ledit canal de mélange chaud (4) et atteignant au moins une buse d'injection (8-8') ;
∘ au moins un injecteur (6-6'-6"-...) du gaz supercritique relié à au moins une unité de commande (12), pourvu d'un système commun d'éléments de chauffage adaptés pour chauffer ledit gaz supercritique, jusqu'à une température comprise entre 100°C et 320°C, de préférence 250°C ; ledit gaz supercritique venant d'un réservoir de gaz commun (5) ; chaque injecteur (6-6'-6"-...) étant pourvu d'un deuxième obturateur adapté pour moduler l'écoulement du gaz supercritique mélangé à l'intérieur dudit canal de mélange chaud (4) ; ledit canal de mélange chaud (4) étant organisé à proximité d'une buse d'injection (8-8') afin de permettre la dispersion uniforme du gaz supercritique amené à l'intérieur dudit polymère thermoplastique à l'état liquide ;
∘ chaque buse d'injection (8-8') étant pourvue d'un troisième obturateur (9-9') relatif adapté pour introduire une quantité prédéterminée dudit mélange de polymère thermoplastique à l'état liquide et dudit gaz supercritique, à l'intérieur de l'espace intermédiaire d'un moule commun (20) ;
- ledit moule (20) comprenant un composant fixe (10) et un composant mobile (11) adapté pour adopter, de manière réversible, une première configuration ouverte et une deuxième configuration fermée ; ledit composant fixe (10) et ledit composant mobile (11) définissant un espace intermédiaire (13) alimenté par lesdites buses d'injection (8-8') ;
ledit procédé de production comprenant les étapes suivantes :
(A) une première étape d'extrusion du polymère thermoplastique à l'état liquide dans laquelle ledit premier obturateur (2) est ouvert à une pression prédéterminée, de telle sorte qu'une quantité prédéterminée dudit polymère thermoplastique s'écoule à l'intérieur dudit bloc chaud (3) ; ledit moule (20) étant arrangé dans ladite première configuration ouverte, de manière à déterminer une pression à l'intérieur du bloc chaud (3) inférieure ou égale à 300 bar ;
(B) une deuxième étape d'introduction du gaz supercritique, dans laquelle chaque deuxième obturateur des injecteurs (6-6'-6"-...) desdits canaux de mélange chauds (4) est ouvert et une quantité prédéterminée de gaz supercritique s'écoule à l'intérieur desdits canaux de mélange chauds (4) pendant le passage du polymère thermoplastique à l'état liquide ; ledit moule (20) étant arrangé dans la première configuration ouverte, de manière à déterminer une pression à l'intérieur du bloc chaud (3) comprise entre 30 bar et 300 bar ;
(C) une troisième étape de distribution, dans laquelle le mélange constitué par le polymère thermoplastique à l'état liquide et le gaz supercritique est projeté à l'intérieur de chaque buse d'injection (8-8') ; le moule (20) étant toujours situé dans la première configuration ouverte, de manière à déterminer une pression à l'intérieur du bloc chaud (3) comprise entre 30 bar et 300 bar ;
(D) une quatrième étape d'injection, dans laquelle chaque troisième obturateur (9-9') est ouvert, permettant à la quantité souhaitée dudit mélange nécessaire pour faire l'objet à produire de sortir dans l'espace intermédiaire (13) du moule (20) ; le moule (20) étant toujours situé dans la première configuration ouverte, de manière à déterminer une pression à l'intérieur du bloc chaud (3) comprise entre 30 bar et 300 bar ;
(E) une cinquième étape de fermeture de moule, dans laquelle le moule (20) adopte ladite deuxième configuration fermée en rapprochant le composant mobile (11) du composant fixe (10) ; ledit composant mobile (11) exerçant une pression préréglée sur ledit composant fixe (10) comprise entre 300 bar et 1200 bar, de préférence 1000 bar, adaptée pour permettre une distribution uniforme du mélange de polymère thermoplastique et de gaz supercritique à l'intérieur de l'espace intermédiaire (13) du moule (20) ;
(F) une sixième étape de refroidissement de l'objet produit, dans laquelle le moule (20) est maintenu dans ladite deuxième configuration fermée jusqu'à la solidification du mélange de polymère thermoplastique et de gaz supercritique, ledit composant mobile (11) exerçant une pression préréglée sur ledit composant fixe (10) dudit moule (20) comprise entre 300 bar et 1200 bar, de préférence 1000 bar ;
(G) une septième étape d'extraction de l'objet produit, dans laquelle ledit moule (20) adopte ladite première configuration ouverte.

2. Procédé selon la revendication 1, **caractérisé en ce que** la position et/ou la vitesse de chaque troisième obturateur (9-9') est ajustable, chaque buse d'injection (8-8') étant reliée à un dispositif de commande (90), hydraulique ou électrique, adapté pour moduler l'ouverture de chaque troisième obturateur (9-9') de manière à maintenir la pression du polymère thermoplastique à l'intérieur du bloc chaud (3) propre à conserver la condition supercritique souhaitée du gaz.

3. Procédé selon l'une quelconque des revendications précédentes, **caractérisé en ce que** le remplissage complet du bloc chaud (3), avant de procéder à la cinquième étape de fermeture de moule (E), a lieu suivant une pluralité de cycles incluant ladite première étape d'extrusion du polymère thermoplastique (A), ladite deuxième étape d'introduction de gaz supercritique (B), ladite troisième étape de distribution (C) et ladite quatrième étape d'injection (D) qui sont sensiblement simultanées les unes par rapport aux autres.

4. Procédé selon l'une quelconque des revendications précédentes, **caractérisé en ce qu'**entre les cinquièmes étapes de fermeture de moule (E) et la sixième étape de refroidissement (F), une nouvelle étape a lieu pour injecter le mélange à l'intérieur de l'espace intermédiaire (13) dudit moule (20), causant un traitement mixte d'injection-compression et d'injection.

5. Procédé selon l'une quelconque des revendications précédentes, **caractérisé en ce que** l'espace intermédiaire (13) dudit moule (20), au moins quand il est arrangé dans ladite deuxième configuration fermée, est scellé hermétiquement.

6. Procédé selon la revendication 5 précédente, **caractérisé en ce que** pendant la quatrième étape d'injection (D), de l'air est introduit à l'intérieur de l'espace intermédiaire (13) du moule (20), au moyen de canaux appropriés, à une pression prédéterminée propre à commander la pression du polymère thermoplastique et, par conséquent, le développement de microbulles dans le gaz supercritique à l'intérieur du mélange.

7. Procédé selon l'une quelconque des revendications précédentes, **caractérisé en ce que** ledit bloc chaud (3) est pourvu d'un canal de mélange chaud (4), adapté pour alimenter une pluralité de buses d'injection (8-8').

8. Procédé selon l'une quelconque des revendications précédentes, **caractérisé en ce que** chaque injecteur (6-6'-6"-...) de gaz est arrangé à l'extrémité proximale (9.a) de chaque troisième obturateur (9-9') **et en ce que** chaque obturateur (9-9') est en un matériau poreux adapté pour permettre le mélange du gaz supercritique à l'intérieur du polymère thermoplastique à l'état liquide directement à l'intérieur de chaque buse d'injection (8-8').

9. Procédé selon l'une quelconque des revendications précédentes, **caractérisé en ce que** chaque injecteur (6-6'-6"-...) de gaz est arrangé à la fois sur un canal de mélange chaud (4), et à l'extrémité proximale (9.a) d'un troisième obturateur (9-9') **et en ce que** chaque obturateur (9-9') est en un matériau poreux adapté pour permettre le mélange du gaz supercritique à l'intérieur du polymère thermoplastique à l'état liquide directement à l'intérieur de chaque buse d'injection (8-8').

10. Procédé selon l'une quelconque des revendications précédentes, **caractérisé en ce que** chaque buse d'injection (8-8') est arrangée de manière oblique par rapport au plan du moule (20).
